Europäisches Patentamt

European Patent Office

Office européen des brevets

(19)

(11) **EP 0 749 012 A1**

(12) **DEMANDE DE BREVET EUROPEEN**

(43) Date de publication:
**18.12.1996 Bulletin 1996/51**

(51) Int Cl.6: **G01N 21/64**

(21) Numéro de dépôt: **96401247.0**

(22) Date de dépôt: **10.06.1996**

(84) Etats contractants désignés:
**BE DE GB IT**

(30) Priorité: **15.06.1995 FR 9507269**

(71) Demandeur: **INSTITUT FRANCAIS DU PETROLE**
**92500 Rueil Malmaison (FR)**

(72) Inventeur: **Le Coz, Jean-François**
**92000 Nanterre (FR)**

(54) **Procédé et dispositif d'évaluation de l'état d'avancement d'un phénomène transitoire**

(57)    -L'invention concerne un procédé et un dispositif non intrusif d'évaluation en temps réel de l'état d'avancement d'une réaction chimique ou d'une transformation physique, utilisant un traceur fluorescent associé à un réactif.

-    Le procédé selon l'invention consiste à utiliser successivement plusieurs traceurs fluorescents ayant des contantes de réactions différentes afin d'obtenir plusieurs paramètres relatifs à la réaction chimique ou à la transformation physique.

FIG.1

EP 0 749 012 A1

Printed by Jouve, 75001 PARIS (FR)

## Description

La présente invention concerne le domaine des mesures non intrusives destinées à évaluer l'avancement d'un phénomène transitoire tel qu'une réaction chimique ou un changement d'état dans un milieu donné;

Plus précisément les mesures visées utilisent un traceur fluorescent associé à un réactif.

Pour connaître l'état d'avancement d'une réaction chimique, ou d'une transformation physique, on peut effectuer un prélèvement qui est ensuite analysé. On peut aussi utiliser une technique de mesure non-intrusive afin de doser un ou plusieurs réactifs. Une autre méthode connue consiste à introduire des produits deutérés par exemple, qui peuvent être suivis par radioactivité. On peut également utiliser la fluorescence comme propriété optique, et analyser le processus étudié à travers un hublot. Comme les réactifs ne sont pas forcément fluorescents, il est courant d'employer des traceurs, c'est-à-dire des molécules rajoutées en faible quantité et qui participent à la réaction ou transformation. Il est alors essentiel de disposer et d'utiliser des traceurs qui ont le comportement le plus voisin possible du réactif qu'ils sont sensés suivre. Le document EP 296 136 ou encore le brevet US 4 822 733 enseignent d'exploiter les temps de décroissance différents de différents traceurs fluorescents pour mesurer une ou plusieurs luminescences dans un phénomène ayant un bruit de fond assez important.

Pour la mesure de l'épaisseur de films liquides, différentes méthodes ont déjà été utilisées :

L'une consiste à exploiter la différence de conductivité qui existe entre la phase liquide et la phase vapeur du milieu à analyser. Cependant cette méthode n'est pas adaptée pour des liquides ayant une faible conductivité, et de plus est limitée aux mesures de dépôts liquides.

Des méthodes optiques semblent mieux adaptées à la mesure de l'épaisseur de films : on peut par exemple prévoir une paroi transparente traversée par un faisceau LASER qui est focalisé à l'intérieur de la paroi, là où est créé le film à mesurer.

Si la paroi dont on dispose est opaque, une fibre optique la traverse et constitue ainsi le chemin optique nécessaire à l'émission et à la réception du faisceau lumineux. Bien entendu dans ce montage seul un nombre réduit de points de mesure peut être exploité. Par ailleurs comme chaque point de mesure correspond à un perçage de la paroi, des inconvénients peuvent en résulter. En particulier, le film liquide peut être perturbé au niveau du perçage. Il n'est pas certain non plus que l'on reproduise exactement la même extrémité pour chaque fibre, ce qui peut introduire des disparités dans la transmission réalisée par chacune de ces fibres.

Cependant dans certains cas lorsqu'un hublot transparent modifie de façon trop importante les transferts thermiques et/ou le comportement du film, seule cette deuxième solution peut être choisie.

La mesure de l'épaisseur de films est particulièrement intéressante dans les tubulures d'admission des moteurs à combustion interne. En effet dans les moteurs à allumage commandé, les injecteurs sont placés au niveau des conduits d'admission et un film de carburant se forme entre le point d'implantation des injecteurs et la soupape d'admission. Là une seconde atomisation de carburant a lieu, plus grossière que celle créée par les injecteurs eux-mêmes. Sachant que la préparation du mélange carburé dans les pipes d'admission détermine la qualité de la combustion qui va suivre, l'analyse du film de carburant créé à l'intérieur des pipes d'admission et leur évolution peut donc s'avérer particulièrement intéressante car comprendre ce phénomène permet de mieux contrôler la combustion elle-même, notamment au niveau de sa stabilité et des émissions d'imbrûlés à l'échappement.

La fluorescence (F) collectée par une technique optique telle que décrite plus haut, est proportionnelle au produit de la fraction massique en traceur (y) par la masse contenue dans le volume de contrôle (rV) :

$$F = k_F \, y \, rV$$

On voit donc qu'une mesure de concentration est possible si la masse du volume de contrôle (rV) est constante, ou inversement qu'une mesure du volume de contrôle est possible si la concentration en traceur (y) est constante. On est en présence de deux inconnues.

Dans le premier cas, c'est-à-dire lorsque la masse contenue dans le volume sondé est fixe, on peut déterminer l'avancement de la réaction par la connaissance du coefficient de discrimination entre traceur et réactif. On rappelle ici que le coefficient de discrimination

$$\alpha = \frac{dy}{dx} \Big/ \frac{y}{x} \tag{1}$$

$\frac{y}{x}$ étant la concentration du traceur (y) par rapport au réactif (x) ; tandis que dy/dx est la variation du traceur (dy) par rapport à la variation du réactif étudié (dx).

Pour que le traceur réagisse comme le réactif, il faudrait avoir dy / dx = y / x. Ainsi le rapport de concentration entre traceur et réactif est conservé, ce qui conduit à ce que la concentration de traceur par rapport au réactif est constante.

Quand le coefficient de discrimination α est supérieur à l'unité, le traceur réagit plus rapidement que le réactif suivi.

Par intégration de l'équation (1), on obtient une équation reliant l'avancement de la réaction à la concentration relative du traceur :

$$\frac{y}{y_0} = \left[\frac{x}{x_0}\right]^\alpha$$

Dans le deuxième cas où la concentration massique de traceur est constante il est aussi possible de faire des mesures, car le volume sondé contient alors une masse variable qui dépend ou non de l'avancement de la réaction.

Ainsi selon l'art antérieur on peut mesurer soit le changement de la masse volumique soit le changement du volume de contrôle. Le volume de contrôle est proportionnel à l'épaisseur dans le cas d'un film liquide s'écoulant sur une paroi.

Pour résoudre ce type de problème on doit considérer que seul un paramètre par exemple, la masse volumique, varie.

Dans la réalité, plusieurs paramètres peuvent varier simultanément : la densité peut en effet varier sous l'effet de changements de pression, ou d'échanges thermiques, et la concentration sous l'effet de la réaction étudiée.

Dans ces cas, l'hypothèse formulée jusqu'à présent selon laquelle seul un paramètre varie, n'est pas exacte et conduit donc à des résultats très approximatifs, voire erronés.

Ainsi la présente invention permet de résoudre ce problème en prenant en compte le fait que plusieurs paramètres peuvent varier simultanément lors de l'avancement de la réaction ou du phénomène étudié. Autrement dit, des mesures en régime non stationnaire sont possibles selon l'invention.

L'emploi d'au moins deux traceurs qui diffèrent par leur coefficient de discrimination ($\alpha_i$) respectifs permet de résoudre ce problème.

Ainsi la présente invention a pour objet un procédé non intrusif d'évaluation de l'état d'avancement d'une réaction chimique ou d'une transformation physique, utilisant un traceur fluorescent associé à un réactif.

De façon caractéristique, le procédé consiste à utiliser successivement plusieurs traceurs fluorescents ayant des constantes de réactions différentes vis à vis du phénomène étudié afin d'obtenir plusieurs paramètres relatifs à la réaction chimique ou à la transformation physique.

Plus précisément, le procédé peut concerner une évaporation, une oxydation ou une condensation, ou une formation de complexes.

De façon intéressante, l'invention vise l'utilisation du procédé pour quantifier l'évaporation locale d'un film d'essence dans une pipe d'admission d'un moteur à combustion interne.

L'invention a encore pour objet un dispositif destiné à évaluer en temps réel l'état d'avancement d'une réaction chimique ou d'une transformation physique d'un milieu contenant au moins un traceur fluorescent associé à un réactif, comprenant

- un moyen destiné à émettre un rayonnement de type LASER;
- un moyen destiné à véhiculer ledit rayonnement;
- un moyen destiné à focaliser le rayonnement LASER en au moins un point de mesure;
- un moyen destiné à collecter et à traiter en retour le rayonnement de la fluorescence.

Conformément à l'invention, le dispositif comprend

- un moyen d'introduction d'au moins un deuxième traceur fluorescent dans le milieu à évaluer, ledit deuxième traceur ayant des constantes de réaction différentes de celles du premier traceur vis-à-vis du phénomène à étudier;
- un moyen de traitement du signal relatif au rayonnement reçu, destiné à déterminer au moins deux paramètres du milieu.

Avantageusement, les deux paramètres peuvent être la concentration de réactif dans le milieu et la masse de réactif contenue dans le volume de contrôle.

Selon un autre de ses aspects, l'invention concerne un dispositif destiné à évaluer l'état d'avancement d'une réaction chimique ou d'une transformation physique d'un milieu contenant un traceur fluorescent associé à un réactif et comprenant

- un moyen destiné à émettre un rayonnement de type LASER plan;
- un moyen destiné à diriger ledit rayonnement selon un plan déterminé du milieu à évaluer.

Conformément à l'invention, le dispositif comprend

- un moyen pour introduire dans le milieu à analyser au moins un deuxième traceur fluorescent, ayant des constantes de réaction différentes vis-à-vis du phénomène à étudier,
- un moyen pour visualiser le rayonnement dans un plan et enregistrer le signal associé,
- un moyen de traitement du signal relatif audit rayonnement permettant d'obtenir plusieurs paramètres du milieu étudié.

Outre celle qui a déjà été mentionnée ci-avant à propos des moteurs à combustion interne, les applications de l'invention sont nombreuses et variées ; citons à titre illustratif et non limitatif:

- la mesure de l'épaisseur du film d'eau dans des échangeurs de chaleur à condensation;
- la vitesse d'écoulement d'un film liquide sur une paroi;
- la détermination du débit d'une phase vapeur;
- la reconnaissance de contours dans des milieux éloignés et/ou hostiles...etc.

Enoncé différemment, la présente invention met à profit des constantes de réaction différentes entre traceurs au sein du volume de contrôle pendant que le phénomène étudié se poursuit. Le traceur peut ainsi être amené à disparaître complètement à mesure que le phénomène avance.

D'autres caractéristiques, détails et avantages de la présente invention apparaîtront plus clairement à la lecture de la description qui va suivre, faite à titre illustratif et nullement limitatif en référence aux dessins annexés sur lesquels :

- La figure 1 montre un dispositif selon l'invention permettant de mesurer l'état d'avancement d'un film à l'intérieur d'une paroi transparente;
- La figure 2 illustre un dispositif selon l'invention pour la mesure de l'état d'avancement d'un film à l'intérieur d'une paroi opaque;
- Les figures 3A et 3B montrent un montage selon l'invention utilisé pour des mesures selon un plan à l'intérieur d'une tubulure; et
- La figure 4 est une coupe longitudinale simplifiée de la chambre de combustion d'un moteur à combustion interne, dans laquelle l'invention est mise en oeuvre.

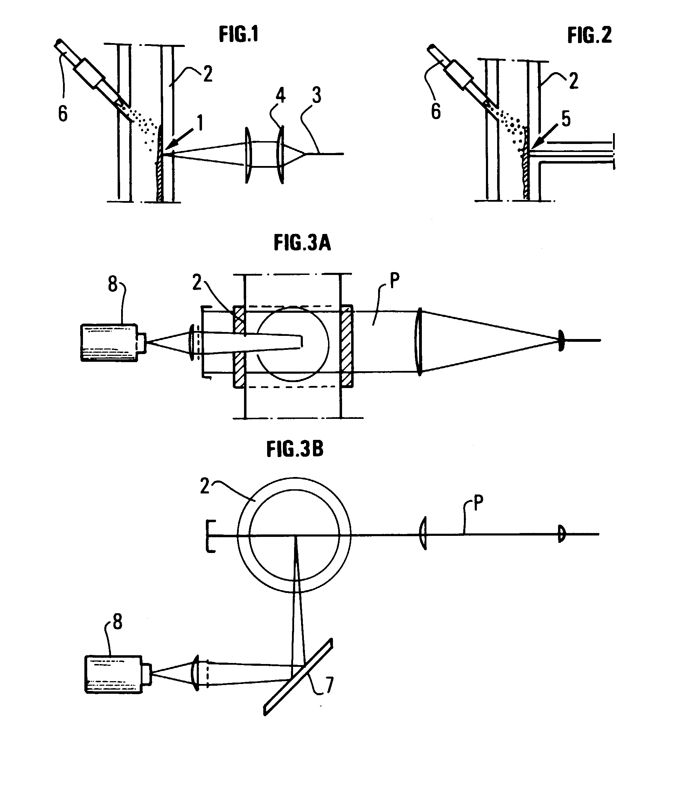

Selon la figure 1, le film à étudier ou volume de mesure 1 est situé à l'intérieur d'un tube 2 aux parois transparentes ou en partie transparentes. Une fibre optique 3 associée à un ensemble de focalisation 4 permet de focaliser un faisceau LASER à l'intérieur du tube 2, sur le volume de mesure 1. L'excitation LASER a une longueur d'onde (par exemple de 441 nm) adaptée au traceur fluorescent à suivre. La réception du faisceau fluorescent (par exemple autour de 485 nm) est réalisée dans le chemin optique inverse.

Pour cela, un miroir dichroïque (non représenté) sépare la fluorescence (faisceau retour) de l'excitation (faisceau aller) et dirige la fluorescence vers des filtres optiques et un photomultiplicateur qui réalise la mesure exacte de la fluorescence. La mesure de l'excitation est contrôlée par exemple à l'aide d'une photodiode (non représentée) qui reçoit une faible proportion (par exemple 1%) du faisceau incident réfléchi par un diviseur optique.

En utilisant un seul traceur fluorescent, une calibration très précise est nécessaire car de cette calibration dépend la précision de la mesure.

De plus il doit être vérifié que l'absorption du faisceau incident par le film n'introduit pas un comportement non linéaire.

La figure 2 illustre l'application de l'invention à un tube 2 dont les parois sont opaques. On réalise alors au moins un perçage 5 dans l'épaisseur du tube, traversé par une fibre optique 3, la fibre 3 débouchant précisément à l'endroit à étudier c'est-à-dire ici sur le film en cours de formation, d'évaporation...

Dans les deux cas qui viennent d'être évoqués, un mélange d'un premier traceur fluorescent et d'iso-octane par exemple est d'abord introduit par un injecteur adapté 6, puis un deuxième traceur fluorescent ayant des constantes de réaction différentes du premier traceur, mélangé avec un iso-octane, est introduit par le même injecteur 6.

Comme il sera expliqué plus en détail ci-après, deux mesures successives de l'intensité de fluorescence émise en utilisant deux traceurs fluorescents évoqués ci-avant peuvent permettre de déduire, moyennant des calculs appropriés, au moins deux variables liées à l'avancement de la réaction.

Les figures 3A et 3B concernent une application de l'invention à la mesure d'une réaction selon un plan P.

Selon la figure 3A il est prévu d'illuminer par un LASER un plan P parallèle à l'axe de la veine dans laquelle circule le milieu à étudier. Le milieu est rempli d'un fluide (en écoulement ou non) composé d'au moins un premier traceur fluorescent et d'un autre composant.

Selon ce mode de réalisation de l'invention, on observe chaque point (ou pixel) du plan P grâce à un système comprenant un miroir de renvoi 7 qui dirige un point élémentaire du plan LASER vers un moyen d'enregistrement et/ou d'analyse 8 tel un film photographique ou un capteur vidéo. Lorsqu'un deuxième traceur, différent du premier, est introduit dans le milieu à étudier, les mesures relatives à ce deuxième traceur sont enregistrées et/ou analysées puis combinées aux mesures concernant le premier traceur.

Sans sortir du cadre de l'invention, le plan de visualisation peut également être orthogonal à l'axe de la veine. Le moyen d'enregistrement du signal 8 peut alors être placé sur l'axe de la veine, à une certaine distance du plan P. Le moyen d'enregistrement 8 peut aussi être placé sur un axe incliné par rapport à l'axe de la veine.

Pour chaque point élémentaire (ou pixel) du plan LASER P, il est possible de déterminer plusieurs paramètres du milieu à analyser.

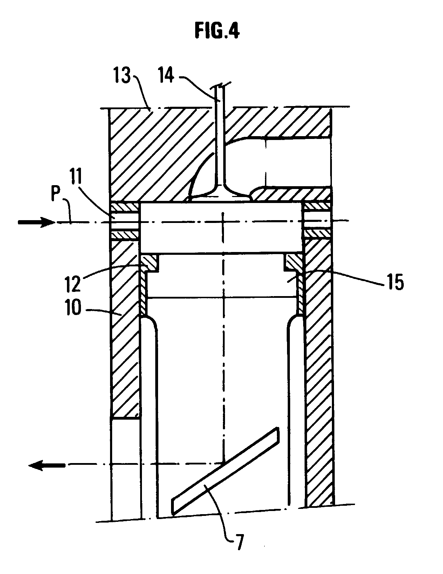

La figure 4 illustre l'application de l'invention dans un cylindre d'un moteur à combustion interne. Selon cet exemple de réalisation de l'invention, le cylindre présente une chemise 10 surmontée d'un hublot transparent 11 traversé par un plan LASER P tel que décrit ci-dessus. Le piston 12 est rallongé vu que la chemise est surmontée du hublot 11. Un autre hublot 15 peut en outre être prévu dans le piston 12 afin de permettre à un miroir de renvoi 7, placé sous le hublot 15 de renvoyer l'image du plan LASER P vers un moyen d'enregistrement et/ou d'analyse non représenté ici.

Selon l'exemple donné par la figure 4, le premier hublot 11 est préférentiellement placé au plus près de la culasse 13 et de la soupape d'admission 14 du moteur, afin de pouvoir analyser plus particulièrement la zone où s'initie la combustion.

Il est bien évident que la combustion dans les moteurs est un phénomène complexe, faisant intervenir un bon nombre de paramètres à la fois physiques et chimiques, tels que température, pression..., l'objectif étant d'atteindre la combustion la plus énergétique et la plus propre possible c'est-à-dire générant un minimum d'imbrûlés. Par ailleurs chaque combustions ayant lieu en un laps de temps (plusieurs dizaines de combustion par seconde) très réduit, seules des mesures à l'intérieur du cycle peuvent permettre d'appréhender ce phénomène de façon fiable et précise.

C'est pourquoi les contrôles dits électroniques du moteur, utilisant un micro-calculateur embarqué sont devenus courants ces dernières années. Ceci a permis de mieux contrôler la formation du mélange et d'améliorer notamment la combustion elle-même.

La présente invention permet donc, selon l'une de ses applications, de mieux appréhender les paramètres relatifs à la préparation du mélange et à la combustion et par là-même d'améliorer celle-ci.

En effet comme il a déjà été brièvement décrit ci-dessus lors de la combustion, comme dans le cas de nombreuses autres réactions physiques ou chimiques, plusieurs grandeurs peuvent varier plus ou moins simultanément.

De façon habituelle plusieurs mesures et donc plusieurs capteurs sont nécessaires.

La présente invention permet d'obtenir aux moins deux paramètres relatifs à une réaction, sans la présence de plusieurs capteurs.

Ainsi, la présente invention prévoit dans une réaction utilisant un traceur fluorescent associé à un réactif, d'utiliser successivement au moins deux traceurs qui diffèrent par leurs coefficient de discrimination $\alpha$.

Le but est d'obtenir au moins deux équations grâce auxquelles au moins deux inconnues peuvent être déterminées.

Selon une application de l'invention, le volume sondé contient une masse qui peut varier au cours de la réaction, sous l'effet de plusieurs paramètres tels que la pression ou les échanges thermiques.

Selon l'invention, on peut déterminer la masse contenue dans le volume de mesure par l'emploi de deux traceurs différents par leurs coefficients de discrimination c'est-à-dire des traceurs ayant des propriétés différentes vis-à-vis du phénomène étudié. Le but est ici d'obtenir deux équations grâce auxquelles les deux inconnues que sont la concentration du réactif et la masse contenue dans le volume sondé peuvent être obtenues.

En employant deux traceurs dont les fractions massiques seront notées respectivement $y^1$ et $y^2$ et ayant des coefficients de discrimination $\alpha^1$ et $\alpha^2$, on obtient par deux expérimentations successives les quantités exprimées par les équations suivantes. Soit:

$$\frac{y^1}{y^1_0} = \frac{F^1}{k^1_F} \cdot \frac{1}{\rho \cdot V \cdot y^1_0} \tag{7.1}$$

$$\frac{y^2}{y^2_0} = \frac{F^2}{k^2_F} \cdot \frac{1}{\rho \cdot V \cdot y^2_0} \tag{7.2}$$

où : $y_0$ est la fraction massique initiale du traceur dans le milieu;
$y/y_0$ est l'évolution du traceur;
F est l'intensité de fluorescence mesurée;
$k_F$ est le coefficient d'étalonnage de la fluorescence
(rV) est la masse contenue dans le volume de mesure.

De ces deux équations, on peut éliminer le terme $(\rho V)$, par division membre à membre. Prenons les notations suivantes pour simplifier :

$$K^1 = \frac{F^1}{k_F^1 \cdot y_0^1} \text{ et } K^2 = \frac{F^2}{k_F^2 \cdot y_0^2}$$

Les équations (7) deviennent:

$$\frac{y^1}{y_0^1} = \frac{K^1}{\rho \cdot V} \text{ et } \frac{y^2}{y_0^2} = \frac{K^2}{\rho \cdot V} \tag{8}$$

Sachant que

$$\frac{y}{x} = \left[\frac{x}{x_0}\right]^{(\alpha-1)} \left[\frac{y_0}{x_0}\right]$$

pour les deux traceurs,

$$\frac{y^2}{y_0^2} = \left[\frac{x}{x_0}\right]^{\alpha^2} \text{ et } \frac{y^1}{y_0^1} = \left[\frac{x}{x_0}\right]^{\alpha^1} \tag{9}$$

Finalement en combinant les équations (8) et (9) l'avancement de la réaction est :

$$\frac{x}{x_0} = \left[\frac{K^1}{K^2}\right]^{\frac{1}{\alpha^1 - \alpha^2}} \tag{10}$$

On a donc mesuré l'avancement

$$\left(\frac{x}{x_0}\right)$$

de la réaction étudiée grâce à deux traceurs ayant des constantes de réactions $\alpha^1$ et $\alpha^2$ différentes. De plus il en découle qu'il est inutile de chercher le traceur "parfait" pour suivre la réaction comme dans l'art antérieur. Les traceurs utilisés selon l'invention ne suivent pas nécessairement exactement le phénomène étudié. Pour lever cette incertitude, plusieurs traceurs sont utilisés, qui peuvent même disparaître au sein du volume étudié pendant que le phénomène étudié se poursuit.

La masse de réactif $(\rho V)$ contenue dans le volume de mesure peut à présent être calculée par l'une des deux équations (7.1) ou (7.2). Dans le cas d'un écoulement diphasique, constitué d'un film liquide en cours d'évaporation, cette méthode a été appliquée pour quantifier l'épaisseur locale du film liquide. Le liquide étudié était l'iso-octane, et les traceurs la pentanedione et l'hexanedione, dont les coefficients de discrimination sont 2. et 0.8 respectivement.

De façon plus générale, considérons une technique de mesure utilisant un traceur fluorescent dans une réaction pour suivre un réactif particulier. On connaît le rapport de la constante de réaction de ce traceur à celle de ce réactif.

C'est ce que l'on a appelé coefficient de discrimination. Le volume sondé par la mesure émet une intensité de fluorescence qui est une fonction connue et calibrée de plusieurs paramètres qui peuvent tous varier en fonction de l'avancement de la réaction :

- la fraction massique du traceur
- la masse contenue dans le volume sondé par la mesure (c'est le cas évoqué ci-dessus à 2 inconnues), plus :
- la température par exemple
- etc...

soit un total de $n$ paramètres.

Si on mesure l'intensité de fluorescence émise en utilisant successivement $n$ traceurs différents, dans des conditions de réactions identiques, on peut résoudre entièrement le système, qui se compose de $n$ équations à $n$ inconnues. On peut alors en déduire l'avancement de la réaction du réactif et de chaque traceur, la masse sondée par la mesure, ainsi que toutes les autres variables dont dépend la fluorescence, comme la température.

Un test supplémentaire avec un $(n+1)$ème traceur permet en outre de déterminer son coefficient de discrimination. Une application particulière à l'évaporation de l'iso-octane a ainsi permis de calculer le coefficient de discrimination de la butanedione, par rapport à l'iso-octane, les deux traceurs de référence étant la pentanedione et l'hexanedione. Ce coefficient a été évalué à environ 5.5.

## Revendications

1. Procédé non intrusif d'évaluation de l'état d'avancement d'une réaction chimique ou d'une transformation physique, utilisant un traceur fluorescent associé à un réactif, caractérisé en ce qu'il consiste à utiliser successivement plusieurs traceurs fluorescents ayant des constantes de réactions différentes vis-à-vis du phénomène étudié afin d'obtenir plusieurs paramètres relatifs à la réaction chimique ou à la transformation physique.

2. Procédé caractérisé en ce qu'il concerne une évaporation ou une oxydation ou une condensation ou une formation de complexes.

3. Utilisation du procédé selon l'une quelconque des revendications 1 ou 2 pour quantifier l'évaporation locale d'un film d'essence dans une pipe d'admission d'un moteur à combustion interne.

4. Dispositif destiné à évaluer en temps réel l'état d'avancement d'une réaction chimique ou d'une transformation physique d'un milieu contenant au moins un traceur fluorescent associé à un réactif, comprenant

   - un moyen destiné à émettre un rayonnement de type LASER;
   - un moyen destiné à véhiculer ledit LASER;
   - un moyen destiné à focaliser le rayonnement LASER en au moins un point de mesure;
   - un moyen destiné à collecter et à traiter en retour le rayonnement de la fluorescence

   caractérisé en ce qu'il comprend en outre

   - un moyen d'introduction d'au moins un deuxième traceur fluorescent dans le milieu à évaluer, ledit deuxième traceur ayant des constantes de réaction différentes de celles du premier traceur vis-à-vis du phénomène étudié; et
   - un moyen de traitement du signal relatif au rayonnement reçu destiné à déterminer au moins deux paramètres du milieu.

5. Dispositif selon la revendication 4, caractérisé en ce que les deux paramètres sont liés à la concentration de réactif dans le milieu et la masse de réactif contenue dans le volume de contrôle.

6. Dispositif destiné à évaluer en temps réel l'état d'avancement d'une réaction chimique ou d'une transformation physique d'un milieu contenant au moins un premier traceur fluorescent associé à un réactif, comprenant

   - un moyen destiné à émettre un rayonnement de type LASER plan;
   - un moyen destiné à diriger ledit rayonnement selon un plan déterminé du milieu à évaluer;

caractérisé en ce qu'il comprend en outre

- un moyen pour introduire dans le milieu à analyser au moins un deuxième traceur fluorescent, ayant des constantes de réaction différentes audit premier traceur vis-à-vis du phénomène étudié,
- un moyen pour visualiser le rayonnement dans un plan et enregistrer le signal associé, et
- un moyen de traitement du signal relatif audit rayonnement afin d'obtenir plusieurs paramètres du milieu étudié.

**FIG.1**

**FIG.2**

**FIG.3A**

**FIG.3B**

# FIG.4

Office européen
des brevets

**RAPPORT DE RECHERCHE EUROPEENNE**

Numero de la demande

EP 96 40 1247

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 296 136 (WALLAC OY) 21 Décembre 1988 <br> * le document en entier * <br> --- | 1,4,6 | G01N21/64 |
| X | US-A-4 822 733 (MORRISON LARRY E) 18 Avril 1989 | 1 | |
| A | * colonne 1 - colonne 7 * <br> ----- | 4,6 | |

| DOMAINES TECHNIQUES RECHERCHES (Int.Cl.6) |
|---|
| G01N |

Le présent rapport a été établi pour toutes les revendications

| Lieu de la recherche | Date d'achèvement de la recherche | Examinateur |
|---|---|---|
| LA HAYE | 4 Septembre 1996 | Scheu, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)